(19) Europäisches Patentamt

European Patent Office

Office européen des brevets

(11) **EP 4 552 509 A1**

(12) **EUROPEAN PATENT APPLICATION**

(43) Date of publication:
 14.05.2025 Bulletin 2025/20

(21) Application number: 24219865.3

(22) Date of filing: 30.08.2021

(51) International Patent Classification (IPC):
 *A23L 17/00* (2016.01)    *A23B 4/03* (2006.01)
 *A23B 4/06* (2006.01)    *A23L 17/10* (2016.01)
 *A23L 17/40* (2016.01)    *A23L 17/50* (2016.01)
 *A23L 17/60* (2016.01)

(52) Cooperative Patent Classification (CPC):
 **A23L 17/00; A23B 4/03; A23B 4/031; A23B 4/066;
 A23L 17/10; A23L 17/40; A23L 17/50; A23L 17/60**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**

(30) Priority:  31.08.2020  DK PA202000979
        08.03.2021  DK PA202100242

(62) Document number(s) of the earlier application(s) in
 accordance with Art. 76 EPC:
 **21769055.1 / 4 203 706**

(71) Applicant: **Qullukkat IVS
 3952 Ilulissat (GL)**

(72) Inventor: **LOVSKOV, Jesper
 3952 Ilulissat (GL)**

(74) Representative: **Arnason Faktor
 Intellectual Property Consulting
 Gudridarstig 2-4
 113 Reykjavik (IS)**

Remarks:
 This application was filed on 13-12-2024 as a
 divisional application to the application mentioned
 under INID code 62.

(54) **MODULAR SYSTEM FOR PRODUCTION OF DRIED SEAFOOD PRODUCTS AND METHOD OF
 PRODUCING A DRIED SEAFOOD PRODUCT**

(57)    A modular system for production of dried seafood products, wherein the module comprises a container (102). The container comprises a drying room (104) for holding racks (106) of seafood materials that are to become the dried seafood products. The container further comprising an air heater (108) configured for heating air in the drying room (104) to exceed a selected minimum temperature and a freezing unit (110) configured for cooling air in the drying room (104) and maintaining an air temperature below a selected maximum temperature, the selected maximum temperature being below freezing. A method of producing dried seafood products is also disclosed.

**FIG. 1**

**Description**

FIELD OF THE INVENTION

The present invention relates to production of dried seafood products. Particularly, the invention relates to freeze drying of seafood products.

BACKGROUND OF THE INVENTION

Drying of fish meat is a traditional way of preserving meat in many areas, for instance Greenland. A natural way of drying fish meat is to simply arrange the meat on an outside rack and await the drying. However, in order for the drying process to be successful in achieving a suitable product, certain environmental requirements needs to be met, such as a climate with suitable temperatures throughout the drying process.

Hence, an improved method of producing a dried fish product and other dried seafood products would be advantageous, and in particular a reliable system for achieving such a product would be advantageous.

OBJECT OF THE INVENTION

An object of the present invention is to provide an alternative to the conventional way of drying seafood meat.

A further object of the present invention is to provide an energy efficient alternative to the prior art, in which a high quality product may be achieved with a high resilience for adverse weather conditions.

In particular, it may be seen as a further object of the present invention to provide a modular system for production of dried seafood products that enables production of a high quality product whether based on fatty fish, lean fish species or other types of seafood, such as shrimp or prawns.

A yet another object of the present invention is to provide a modular system for production of dried seafood products, where the system is flexible to an extend that it is easy to establish, easy to control the production remotely and to move the production to different locations.

SUMMARY OF THE INVENTION

Thus, the above-described object and several other objects are intended to be obtained in a first aspect of the invention by providing a modular system for production of dried seafood products, wherein the module comprises a container. The container comprises a drying room for holding racks of seafood materials that are to become the dried seafood products. The container further comprising an air heater configured for heating air in the drying room to exceed a selected minimum temperature and a freezing unit configured for cooling air in the drying room and maintaining an air temperature below a selected maximum temperature, the selected maximum temperature being below freezing.

The selected maximum temperature may be below 0 degree Celsius.

Alternatively, the container comprises an ambient air intake configured for controllably allowing ingress of ambient air from an outside of the system to the drying room, and an exhaust unit configured for controllably allowing discharge of air from the drying room.

The production of dried fish products and other dried seafood products may be achieved even where the natural environment does not support such a process for all or part of a natural drying process. Since the system is modular, it may be moved temporarily to locations that have a passing need for the capability of drying seafood, but e.g. without having the volume to sustain permanent production. Having a drying room with both ambient air intake and exhaust enables exploiting when the outside air temperature has a suitable temperature for drying, i.e. such that neither cooling nor heating is required. In addition, having the air heater and the freezing unit enables the modular system to be operated when the outside temperature is not suitable for drying seafood.

During a period where the temperature in an environment around and outside the container becomes warmer than -6 degree Celsius, it is of an advantage to short off the ambient air intake and the exhaust unit as that will result in a lower power consumption of the freezing unit.

In a situation where the temperature in an environment around and outside the container becomes -6 degree Celsius or colder, then it would be an advantage to have the ambient air intake and the exhaust unit turned on as this will provide a lower power consumption of the freezing unit.

If the temperature in an environment around and outside the container is between -6 degree Celsius and -2 degree Celsius, it would be an advantage to have the ambient air intake and the exhaust unit turned on for a short duration of the drying process for the purpose of forcing the water within the meat of the seafood to an outer part of the meat, caused by the air coming in from the environment around and outside the container. Thereafter, the ambient air intake and the exhaust unit are turned off and air temperature of the drying room starts to decrease. The freezing unit is turned on. Since the water of the meat has been extracted to the outer part of the meat the complete drying process of the seafood becomes shorter.

The method for drying the seafood during a drying process may include drying the seafood at an air temperature within the drying room of about -6 degrees and to - 2 degrees for a first duration, and then at an air temperature which is colder than - 4 degrees for a second duration. The first duration is shorter than the second duration. Thereby, the complete drying time of the seafood becomes shorter.

In another example, within the first duration the temperature may be colder than 0 degrees, and within the second duration the temperature may be colder than -4 degrees.

The first duration may be between 3 days and 7 days, and the second duration may be between 20 days and 100 days.

The present inventor has realized that duration of the drying process when the temperature is below, e.g., -10 degrees C is inconveniently long, while the seafood slices will deteriorate if drying is attempted at temperatures above freezing. Fish meat from different species of fish has different tolerances for drying at temperatures at the high end of the range, such that fatty fish meat will generally require a lower maximum temperature to avoid getting a generally unwanted rancid taste. In contrast, lean fish meat will generally tolerate a higher maximum temperature while maintaining a good quality of the finished product. In one example, drying of cod, which is a fish having relatively lean meat, may take place at a maximum temperature of -5 degrees Celsius in the beginning of the drying process, and a maximum temperature of -7 degrees Celsius later in the process. In this way, the drying process is kick-started in the beginning, while the moisture contents of the fish meat is high, while a more gently drying is performed in the later stages. To reach the final product, a higher temperature of about -2 degrees Celsius may be applied for about half a day at the end of the procedure. In another example, drying Greenland halibut, which is a fish having meat with a relatively high fat content. Due to the high fat content, this meat is prone to developing a rancid taste and smell if the temperature is too high. Drying may in this case, for instance, be performed at a maximum temperature of -7 degrees C throughout the process.

To reduce the risk of parasites in the dried seafood products it will be an advantage if the air temperature in the drying room becomes below -10 degree Celsius for a duration of the drying process. The air temperature may be between -25 degree Celsius and -10 degree Celsius, such as about -25 degrees Celsius, about -20 degrees Celsius, about -18 degrees Celsius, about -16 degrees Celsius, about -14 degrees Celsius, about -12 degree Celsius, or -10 degrees Celsius for a duration of the dying process.

The controlling of the air temperature of the drying room may be in the range between -25 degree Celsius and 0 degree Celsius, such as about -25 degrees Celsius, -20 degrees Celsius, -18 degrees Celsius, about -16 degrees Celsius, about -14 degrees Celsius, about -12 degree Celsius, -10 degrees Celsius, about - 8 degrees Celsius, about -6 degrees Celsius, about -4 degrees Celsius, or -2 degrees Celsius, for a duration of the drying process.

For reducing the duration of the drying process, it would be of an advantage to freeze the seafood before the drying process according to a freezing scheme. The freezing scheme includes a temperature change of the meat down to a minimum temperature. The temperature change of the meat is about -5 degree Celsius per hour or less The temperature change may be about -5 degree Celsius per hour, about -4 degree Celsius per hour, such as about -3 degree Celsius per hour, about -2 degree Celsius per hour, or about -1 degree Celsius per hour. The minimum temperature of the seafood product may be below -10 degree Celsius, such as about -12 degree Celsius, about -14 degree Celsius, about -16 degree Celsius, about -18 degree Celsius, or about -20 degree Celsius. For example, an optimal freezing scheme may include freezing the seafood product such that the temperature of the seafood product has reached -18 degree Celsius after 4 hours or 6 hours.

With an optimal freezing scheme, the cells of the seafood products start to bursts and water seeps out of the cells, which at the end has the effect that the drying time of the seafood product will be reduced significantly. The effect of water seeping out of the cells during freezing is named freezer burn. In the context of this application, the term seafood is to be understood to comprise fish, shellfish, whale, and other edible items with a marine origin.

In one embodiment, the freezing unit comprises an inside portion and an outside portion, the inside portion being arranged within the container and the outside portion being arrangeable outside the container. The outside portion may be directly attached to an outside of the container. Alternatively, the outside portion may be arranged outside the container and in a vicinity thereof, while being in fluid communication with the inside portion.

In some embodiments, the ambient air intake and the exhaust unit are configured to operate jointly to ensure a desired ventilation of ambient air into the drying room and a corresponding ventilation of air away from the drying room.

In one such embodiment, the ambient air intake comprises a fan for forcing ambient air into the container. In this way, an overpressure may be achieved inside the container, thus forcing air out of the exhaust unit. Maintaining an overpressure or neutral pressure in the container reduces the risk of "false air" entering the container via other, unintentional, openings.

In another such embodiment, the exhaust unit actively draws air out of the drying room, and the ambient air intake is comprised as a passive air vent allowing the air drawn out by the exhaust unit be replaced with ambient air from outside the container.

In yet another such embodiment, both the ambient air intake and the exhaust unit are actively operated units.

In an embodiment of the system according to the invention, the container further comprises a control unit configured for controlling one or more of the air heater, the freezing unit, the ambient air intake, and the exhaust unit. In this way, operations of the modular system may be conveniently controlled via the control unit. A control unit that may be suitable for automating the operation of the system may for instance be a PLC, a general purpose computer, or the like.

In an embodiment of the system according to the invention, the container is an ISO 20' or 40' container, preferably of the high-cube format. In this way, the modular system may be conveniently moved and otherwise handled by standardized transport systems, tools and equipment.

In one embodiment of the system according to the invention, the container is insulated. In this way, energy consumption for operating the freezing unit and/or the air heater may be reduced.

In an embodiment of the system according to the invention, the container further comprises an air circulation unit configured for circulating air within the drying room. In this way, the drying process may be accelerated, and an even air temperature within the drying room may be ensured.

In one embodiment of the system, the air circulation unit is enabled for substantially the whole duration of the drying process. Thus, the air circulation unit is only turned off, e.g., when personnel is entering the drying room. In this way, a fast and uniform drying process is achieved throughout the drying room.]

In an embodiment of the system, the control unit is configured for controlling the air circulation unit. In this way, the drying process may be further automated by also allowing the control unit to control the air circulation unit.

In one embodiment, the control unit may turn the air circulation unit on or off.

In one embodiment, the control unit may control a circulation air speed of the air circulation unit. In this way, a more accurate control of the drying process may be achieved. For instance, meat from different species of fish may have a different structural strength and thus tolerance for air speed, such that meat from one species may tolerate a higher air speed than meat from another, before disintegrating or falling of the rack.

In an embodiment of the system according to the invention, the air circulation unit is a separate unit. The air circulation unit may conveniently be arranged as a stand-alone unit, e.g. a fan.

In another embodiment, the air circulation unit is comprised by the air heater. Air circulation may be achieved by some air heaters, without necessarily engaging the heating element. In this way, the use of a separate air circulation unit may be avoided, while providing the same capability of circulating air in the drying room.

In yet another embodiment, the air circulation unit is comprised by the freezing unit. Air circulation may be achieved by some freezing units, without necessarily engaging the freezing element. In this way, the use of a separate air circulation unit may be avoided, while providing the same capability of circulating air in the drying room.

In an embodiment, the ambient air intake comprising an air filter. In this way, ambient air from the outside may be allowed into the drying room, while controlling the risk of polluting the seafood products being dried. Specifically, foreign objects such as dust and insects may be kept outside the drying room.

In an embodiment of the system according to the invention, comprising an inside temperature sensor for measuring an inside temperature, the inside temperature being an air temperature within the drying room, the control unit further being configured for receiving the inside temperature from the inside temperature sensor. In this way, the drying process may be further automated, by providing the control unit with temperature data for the inside temperature in the drying room. This enables a more precise control over the process, since the freezing unit may be engaged automatically, e.g. as the inside temperature rises to a predefined maximum allowable temperature, such that the temperature may be brought back down into an acceptable range. Alternatively, the air heater may be engaged automatically if the inside temperature falls to a predefined minimum allowable temperature, such that the temperature may be brought back up into an acceptable range.

In an embodiment of the system according to the invention, the system comprises an outside temperature sensor for measuring an outside temperature, the outside temperature being an air temperature of ambient air outside the system, the control unit further being configured for receiving the outside temperature from the outside temperature sensor. In this way, efficiency of the drying process may be increased through data on the outside temperature. I.e. if the outside temperature is lower than the inside temperature and the freezing unit is engaged or is about to be engaged, it may be desirable to discharge air from the drying room via the exhaust unit while allowing ingress of ambient air via the ambient air intake. Similarly, if the outside temperature is higher than the inside temperature and the air heater is engaged or is about to be engaged, it may be desirable to discharge air from the drying room via the exhaust unit while allowing ingress of ambient air via the ambient air intake.

In an embodiment of the system according to the invention, the system further comprising an inside humidity sensor for measuring an inside humidity, the inside humidity being an air humidity within the drying room, the control unit further being configured for receiving the inside humidity from the inside humidity sensor. In this way, an improved control over the drying process may be achieved. For instance, even if the temperature is within the desired temperature range, ventilation may be needed if the inside humidity is high. In that case, humid air from the drying room is advantageously discharged via the exhaust unit, and ambient air is let in via the ambient air intake. If the ambient air let into the drying room then changes the inside temperature to rise above a selected maximum temperature, the freezing unit is engaged. Contrarily, if the ambient air let into the drying room changes the inside temperature to drop below the selected minimum temperature, the air heater is engaged.

In one embodiment, the system further comprises an outside humidity sensor for measuring an outside humidity, the outside humidity being an air humidity of the ambient air outside the system, the control unit further being configured for receiving the outside humidity from the outside humidity sensor. In this way, the outside humidity may be taken into account by the control unit, e.g. to prevent excessively humid ambient air into the drying room.

The above described object and several other objects are further intended to be obtained in a second aspect of the invention by providing method of producing a dried seafood product during a drying process, the method comprising:

- providing pieces of seafood for drying,
- arranging the pieces onto a rack in a drying room,
- controlling an air temperature in the drying room via a freezing unit and an air heater, such that the air temperature is generally below 0 degree Celsius for a duration of the drying process, and
- ending the drying process when a desired product quality has been achieved.

The controlling of the air temperature of the drying room for a duration of the drying process is in the range between -25 degree Celsius and 0 degree Celsius, such as about -25 degrees Celsius, -20 degrees Celsius, -18 degrees Celsius, about -16 degrees Celsius, about -14 degrees Celsius, about -12 degree Celsius, - 10 degrees Celsius, about -8 degrees Celsius, about -6 degrees Celsius, about -4 degrees Celsius, or -2 degrees Celsius.

In this way, a natural drying process of fish meat as traditionally used in Greenland, may be replicated in a controlled manner, regardless of the ambient air temperature and other environmental factors. The present inventor has realized that a high quality dried seafood product may be advantageously achieved in this manner.

In an embodiment of the method according to the invention, providing seafood pieces comprises:

- cleaning a fresh fish,
- fillet the fish, and
- cutting the fish fillet meat into slices.

In an embodiment of the method according to the invention, the method further comprising freezing the fillet before cutting the fish meat into slices. In this way, thin and highly regular slices may be cut. Cutting may, e.g. be performed using a slicing machine.

In one embodiment, cutting is performed using an automated slicing machine.

In an embodiment of the method according to the invention, the slices are cut to have a thickness of 1mm - 15mm, such as 1.5mm - 10mm, or even such as 2mm - 8 mm. The inventor has realized that slices having a thickness within these ranges yield a particularly attractive dried seafood product.

As an example, Greenland halibut may be sliced to a thickness of about 3.5mm, cod to a thickness of about 4mm, and Atlantic wolfish to a thickness of about 10mm.

In an embodiment of the method, the slices are subjected to a freeze-treatment phase during the drying process, in which phase the temperature of the slices are maintained below -20 degrees C for at least 48 hours. For hygienic reasons, such a freeze-treatment may be a requirement with local authorities, to avoid living parasites in the meat.

In an embodiment of the method according to the invention, the drying process lasts 10 - 90 day, such as 10 - 60 days, such as 15 - 45 days, such as 25 to 85 days, such as 60 to 85 days or even such as 20 - 35 days. A duration of the drying process in this range is found to provide a high quality product with a long shelf life and an attractive texture.

The period of the drying period depends mainly on the humidity in the air inside the drying room. The temperature of the air inside the drying room does also have an effect of the period of the drying period. In a preferred embodiment the air in the drying room may have a humidity range of between 90 % and 100 %, and a temperature range of below zero degree Celsius. In a further preferred embodiment, the temperature range may be between -2 degree Celsius and -10 degree Celsius. Of the two preferred embodiments, the drying process lasts 70 to 90 days. The combination of the humidity range and the temperature provides an even more improved quality of the product.

Throughout the drying period the temperature and/or the humidity may vary outside the drying room and which will inevitably course the temperature and/or humidity to vary inside the drying room. In other situations, the temperature and/or the humidity may vary inside the drying room because of the performance of the air heater, the freezing unit, the ambient air intake and/or the exhaust unit. Any temperature and/or humidity changes will have an effect on the duration of the drying period. Therefore, it will be of a benefit to monitor the water content of the product for example via a moisture sensor or to monitor the loss in weight of the product by weighing the product continuously throughout the drying process.

In an embodiment, the quality of the product is of exceptional quality when a loss in weight in percentage per day is kept within a defined range throughout the whole drying period. By keeping the loss in weight within the defined range the quality of the dried seafood product improves even more. The loss in weight in percentage per day may be determined based on following equation:

$$Loss\ in\ weight(\%/day) = \frac{W1(t1) - W2(t2)}{W1(t1)} * \frac{100}{t2 - t1}$$

, where W1 is the measured weight of the product at time t1 during the drying process, and W2 is the measured weight of the product at time t2 during the drying process. "t2" indicates that the weight measurement, W1, is perform in time after the measurement of weight, W2, at time t1. By monitoring the loss in weight in percentage per day makes it possible to determine whether the temperature and/or the humidity within the drying room is acceptable for the drying process. Having sensors for measuring the temperature and the humidity will be an advantage for controlling the process. Furthermore, it has been found out that the different levels of nutrients in the seafood will also affect the drying time, and thereby, the loss in weight in percentage per day will also be affected. Thereby, it would be of an advantage to monitor the rate in loss in weight for a statistically reasonable number of seafood or to monitor the loss in weight of a plurality of seafood arranged on the rack.

Throughout the drying period different ranges may be defined for the loss in weight in percentage per day. For example, from day 0 to day 15 the loss in weight may be between 2 % per day and 4 % per day. Then between 15 days and to the final day of the drying period the loss in weight may vary between 0.1 and 2 % per day.

In another example the loss in weight may be determined as a rate per day and not as a percentage per day.

For determining the end of the drying period, it will be of an advantage to monitor a loss in weight in percentage throughout the drying period. The quality of the product would be of an exceptional quality when ending the drying period when a loss in weight in percentage becomes lower or equal to a threshold of between - 70 % and -55%, such as -65% and 56 %, and such as -62% and -57%. The loss in weight is determined based on following equation:

$$Loss\ in\ weight(\%) = \frac{W1(t1) - W2(0)}{W2(0)} * 100$$

, where W1 is the measured weight of the product at time t1 during the drying process, and W2 is the measured weight of the product at the beginning of the drying period. W1(t1) is measured continuously throughout the drying period, and how often the measurement should be performed depends on the temperature and the humidity of the drying room and/or the monitoring of the loss in weight per percentage per day. How often the measurement W1 is performed may be every 7 days, 14 days or 21 days, or between an interval of 7 days and 21 days. A change in the frequency of doing the measurement, W1, may change when the measured loss in weight is close to the threshold which determines when the drying period ends. The frequency of doing the measurement may also change due to a change in the loss in weight per day. For example, the frequency of doing the measurement of W1 may be changed to be between 3 days and 7 days when the loss in weight in percentage is 5 % from the threshold, i.e. the measured W1 is between -55% and -60% and the threshold is -60%. In another example, the frequency of doing the measurement of W1 may be changed to be between 3 days and 7 days when the loss in weight in percentage per day is larger than 2 %/day. By varying the frequency of doing the measurement of W1 provides a method which dries the seafood product in a way that results in an even more improved quality of the product.

In another example the loss in weight may be determined as a rate and not as a percentage.

The system may include a processing unit configured to perform and control the drying process by doing the monitoring of the drying process. In one example, the processing unit is configured to perform the monitoring by performing continuously the measurement of the weight, W1.

The rack may include a weight measurement unit which is configured to measure the weight W1 of one or more seafood materials that are arranged on the rack. The weight measurement unit may be connected to the processing unit and the control unit. In another example, the weight measurement unit may be arranged on a floor of the container, and the rack may be arranged on top of the weight measurement unit, and in this example, the loss in weight is measured for a plurality of seafood materials arranged on the rack. In one example, the control unit may include the processing unit.

In an embodiment of the method according to the invention, the seafood is chosen from Greenland halibut, cod, Alaska pollock, Atlantic wolfish, shrimp, and prawn. Meat from these types of seafood have been found to be particularly well suited for this method of drying, and to yield particularly high quality products. This method is suitable both for fatty meats and lean meats.

In another embodiment of the method, the seafood is chosen from halibut, pollock, ray, lumpfish, trout and salmon, or narwhal, minke whale, fin whale, or seal.

According to a broader aspect of the invention, the method of producing a dried product may also be applied to products chosen from reindeer, musk ox, polar bear, blueberries, crowberries and angelicas.

The control unit may be configured to log data that relates to the drying process based on inputs of sensors arranged at different locations or the same locations within or on an outer surface of the container. The control unit is configured to control the air heater, the freezing unit, the ambient air intake and the exhaust unit based on the logged data provided by the sensors, including the outside temperature sensor. Furthermore, the control unit is configured to forward the logged data to a communication system of the modular system. The communication system is configured to communicate via a short-range communication link and/or a long-range communication link to a server, a computer, a smartphone, a tablet, or any kind of a communication device. This enable the possibility of monitoring the drying process remotely. Furthermore, the logged data may be used for optimizing the pre-programmed drying process. Additionally, the optimization of the pre-programmed drying process may be based on artificial intelligence which includes logged data from the sensors, weather conditions received via the communication system. Additionally, the control unit is configured to be controlled via the communication system. Thereby, it is possible to control the drying process remotely. This may be relevant if a sudden change to the drying process has to appear due to an incident caused by a defect air heater, a freezing unit, an ambient air intake, an exhaust unit or a sudden change in the water condition around the container. Under normal condition, the control unit controls the drying process automatically based on a pre-programmed drying process. If the modular system is stroked by an incident then the control unit is configured to send a warning signal via the communication system to the communication device, and thereby, the user of the communication device is being warned and is able to either solve the problem caused by the incident or call assistant.

The short-range communication link may include one or more of the following communication technologies; WI-FI, Bluetooth, Bluetooth Low Energy, EnOcean, Wi-Sun, and ZigBee.

The long -range communication link may include one or more of the following communication technologies; LoRa technology, satellite telephone communication, HF/SSB, 3G, 4G, 5G communication technology, and Global System for Mobile communication (GSM).

The sensors may be one or more of the following sensors: a humidity sensor, a temperature sensor, and a moisture sensor. There may be other type of sensors which may provide sensorial information to the control unit.

The sensors may be arranged within the drying room, at a certain distance to the air heater unit, the freezing unit, the exhaust unit and/or the ambient air intake, and via these locations it is possible to control the temperature and the humidity more precisely.

Furthermore, sensors may be arranged at one or more locations on a rack. The sensors may be applied onto or integrated into the rack. For example, one or more of the sensors may be arranged at a top section of the rack, and/or a middle section of the rack and/or at a bottom section of the rack. Preferably, the one or more sensors may be applied to the middle section of the rack. Because the time for drying the seafood product within the middle section is normally longer than for the seafood arranged within the bottom and the top section. Furthermore, at each of these sections, the sensors may be arranged between the seafood material or injected partially into the seafood material. The bottom section is closest to the floor of the container and the top section is closest to the roof of the container. Thereby, it is possible to monitor more precisely the condition of the seafood material during the drying process. This makes it easier and more convenient to control the drying process remotely.

The moisture sensor may be a water volumetric sensor which includes at least an electrode pin which are injected into the meat of a seafood hanging on the rack, and thereby, it is possible to measure the moisture of the meat, and thereby, controlling when the drying process should end. A moisture threshold may be defined, and when the measured moisture becomes equal or below the moisture threshold then it is an indication of that the drying process should end. Based on the measured moisture and the defined moisture threshold, the control unit is configured to set the drying process into a mode which makes sure that the drying of the seafood products is stopped.

The moisture threshold may be determined based on the seafood product, whether it is a Greenland halibut, a halibut, a blue halibut, a cod, an Alaska pollock, an Atlantic wolfish, a shrimp, or a prawn.

The moisture sensor measures the water content of the seafood, and for measuring the moisture content then a reference water content in the meat should be measured before the start of the drying process. Then, during the drying process the water in the meat is measured continuously, and a moisture content is determined for each of the measurements during the drying process by following equation:

$$\text{Moisture content [\%]} = [RW(t=0) - WC(t=t)] / RW(t=0)*100,$$

RW is the measured water content of the seafood at t=0, indicating the beginning of the drying time. WC is the water content measured at t=t, indicating that the measurement of the water content is performed at a time, t, which is after t=0.

Additionally, the drying room may include one or more racks with these sensors, and they may be arranged within the drying room according to a formation which results in an optimal approximation of the humidity, the temperature and/or the moisture around and within each seafood material being dried. The approximation is based on inputs from each sensor, the known formation of the arrangement of the racks 106 and the distance between the racks. The formation may for example be determined by trigonometry. Thereby, the remote monitoring of the drying process becomes more convenient as the monitoring of the seafood material during the drying process becomes more precise because the temperature, the humidity and/or the moisture of the seafood is better estimated. For increasing the capacity of the production of dried seafood products it is an advantage that the container, being the main container, is configured to be connected to one or more other containers. Thereby, the modular system may comprise the container and the one or more other containers. The one or more other containers may be:

- similar to the main container, which is for producing dried seafood products,
- configured to prepare the seafood products for being dried,
- configured to store the seafood products under controlled conditions before the drying process,
- configured to store the dried seafood products under controlled conditions, and
- configured to facilitate one or more user of the modular system with a toilet, a kitchen, and/or a dressing room.

The control condition may include controlled air temperature and/or humidity.

In a situation where the main container and the one or more other containers are sharing one or more units, such as an air heater, a freezing unit, an ambient air intake, an exhaust unit, a communication system and a control unit, it is of an advantage that the one or more other containers and the main container are configured to communicate with each other or solely to the main container via a short-range communication link. In a situation where an unit of a container of the modular system is defective then one or more of the containers of the modular system may act as a temporary backup for the container with the defective unit, and thereby, the reliability of the modular system improves significantly.

It would therefore be of an advantage to apply an air flow system to each of the container of the modular system which are then connected for the purpose of distributing, heating air, cooling air, and ambient air between the containers. Furthermore, the container with a defective exhaust unit will be able to discharge air via an exhaust unit of a container acting as a temporary backup container. Thereby, it is possible for a container including the air heater, the freezing unit, the ambient air intake and/or the exhaust unit to act as a backup for another container of the modular system, if one or more of the air heater, the freezing unit, the ambient air intake and/or the exhaust unit are defective.

The container, such as the main container and the one or more other containers of the modular system may include an opening in a wall of the container which may be closed by a closing mean, such as a door. Around the opening a sealing mean is arranged, and the sealing mean is configured to be connected to another sealing mean of another opening or another opening of another container of the modular system. The sealing mean results in a sealed path that allows the users of the modular system to operate within and between the two containers without the need of going outside the containers.

The modular system may be installed on locations with poor infrastructure regarding water supply and power supply. In that regards it will be of an advantage to connect a solar cell panel to the modular system for the purpose of generating power to the container(s). Furthermore, a water pump may be connected to the modular system and a water tank for the purpose of supplying water to the container(s). Thereby, the modular system is self-supplied with water and power.

The container is configured to be transported by an automobile transporter, a ship, an airplane or by a helicopter.

The air heater and the freezing unit may be separate units or a combined unit which are applied from the outside of the container and onto an outer surface of the container. Thereby, if a defect may happen for one of the separate units or the combined unit, it would then be easier to replace the defected unit in comparison to if the separate units or the combined unit is/are integrated or applied from within the container and onto an inner surface of the container.

For improving the air flow around the seafood products applied onto the rack, a controllable fane may be arranged in front of the air heater unit, the freezing unit, and/or the ambient air intake, and wherein the controllable fane is configured to move such that the air blowing away from the units and the ambient air intake are distributed more equally around and between the seafood products. That results in a more similar drying of the seafood products, and which then results in a more equal quality of the dried seafood products at the end of the drying process. The controllable fane may be combined with the air circulation unit in the container, and thereby, a more equal condition around and between the seafood products is obtained.

The control unit is configured to control the controllable fane.

The first and second aspect of the present invention may be combined with each other. These and other aspects of the invention will be apparent from and elucidated with reference to the embodiments described hereinafter.

BRIEF DESCRIPTION OF THE FIGURES

The modular system for production of dried seafood products according to the invention will now be described in more detail with regard to the accompanying figures. The figures show one way of implementing the present invention and is not to be construed as being limiting to other possible embodiments falling within the scope of the attached claim set.

Figure 1 illustrates an embodiment of the modular system according to the invention;

Figure 2 illustrates an embodiment of a control unit according to the invention;

Figure 3 illustrates another embodiment of the modular system according to the invention;

Figure 4 illustrates another embodiment of a control unit according to the invention.

Figure 5 illustrates a third embodiment of the modular system according to the invention;

Figure 6 illustrates a third embodiment of a control unit according to the invention;

Figure 7 illustrates an embodiment of the method for production a dried seafood product according to the invention;

Figure 8 is a flow-chart illustrating an embodiment of the method of producing a dried seafood product;

Figure 9 is a flow-chart illustrating another embodiment of the method of producing a dried seafood product;

Figure 10 illustrates yet another embodiment of the modular system;

Figures 11A and 11B illustrate another embodiment of the modular system;

Figure 12 illustrates an example of sensor placements in the modular system;

Figures 13A and 13B illustrate examples how to combine containers in the modular system;

Figures 14A and 14B illustrate examples on communication between the containers;

Figure 15 illustrates another example of the embodiment of the modular system;

Figure 16 illustrates an example of measured weight loss in percentage as a function of days during a drying period; and

Figure 17 illustrates an example of measured weight loss in percentage per day as a function of days during a drying period.

## DETAILED DESCRIPTION OF AN EMBODIMENT

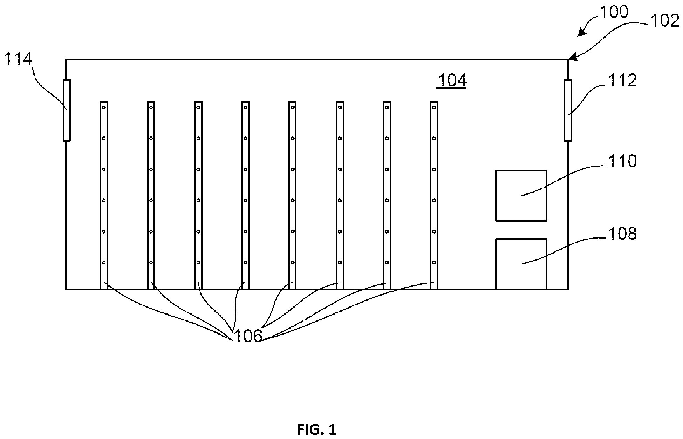

Figure 1 illustrates an embodiment of the modular system 100 for production of dried seafood products. The modular system 100 comprises a container 102, such as a 20 ft or 40 ft ISO shipping container, preferably in the high cube format. The container 102 contains a drying room 104, in which a number of racks 106 are arranged for holding the seafood meat that is to be dried. The racks 106 may take many shapes and forms, and be made from many different materials, without deviating from the scope of the invention. In one embodiment, the racks are arranged on wheels and may each hold a number of drying spears. Fish meat cut into a number of thin slices are then pierced by the spear and arranged in the rack 106 for the duration of the drying process. Other types of seafood, such as shrimp or prawns may not require being cut in slices, but rather be arranged on the racks 106 deshelled but whole.

For maintaining an inside temperature within a suitable range for drying the seafood meat, the container 102 is provided with an air heater 108 and a freezing unit 110, to heat or cool the inside air, respectively. The container 102 is further provided with a controllable ambient air inlet 112, which may optionally be provided with an air filter to ensure purity of the outside air being let into the container 102. Correspondingly, an exhaust unit 114 is arranged to allow for air being expelled from the drying room. The ambient air inlet 112 or the exhaust unit 114 may comprise a fan to provide the desired air exchange between the drying room 104 and the surroundings.

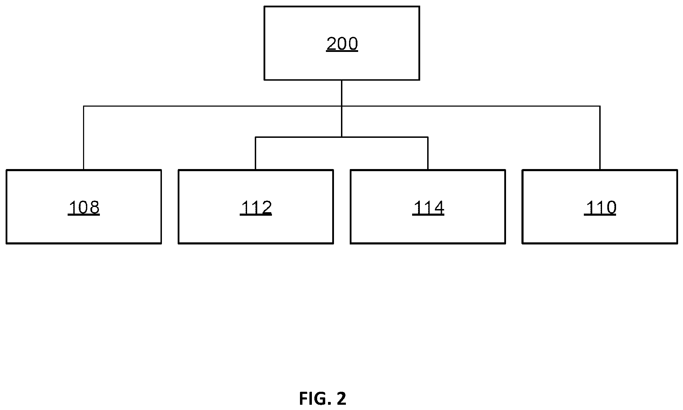

Figure 2 illustrates a control unit 200 that may advantageously be comprised by the system 100. The control unit 200 is here shown to be able to control each of the air heater 108, freezing unit 110, ambient air intake 112, and exhaust unit 114. In other embodiments, the control unit 200 may be configured to only control one or more of the units (108, 110, 112, 114). The control unit 200 may be implemented in a programmable logic controller (PLC) or another type of computer suitable for automating a process. The control unit 200 may operate based on a predetermined timer-based program, or may control the process based on input from one or more sensors, or from e.g. weather information provided from a remote data source, e.g. via the internet.

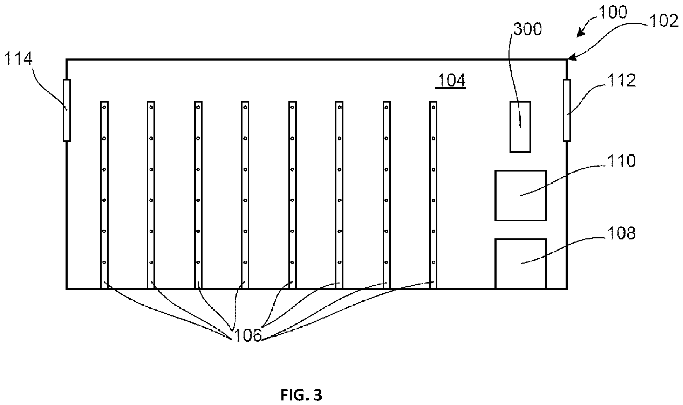

Figure 3 illustrates an embodiment of the modular system 100. The embodiment corresponds to the one shown in figure 1, for which reason only the differences are discussed here. Like reference numerals refer to same or like parts in the two embodiments. In this embodiment, an air circulation unit 300 is further arranged in the container 102. Many different locations of the air circulation unit 300 within the container 102 may be envisioned, provided that circulation of air within the drying room 104, and in particular around the racks 106 is achieved. For ease of illustration, in this figure, the air circulation unit 300 is shown as a stand-alone unit. However, in other embodiments, the air circulation unit 300 may be provided as a part of the air heater 108 and/or the freezing unit 110. Further, in this figure, the air circulation unit 300 is shown as a box fan, i.e. taking in air in a close vicinity to where it expels air. In other embodiments, the air circulation unit 300 may be arranged to take in air from one end of the container 102 and re-circulate the air from the other end of the container 102. According to an example, the air circulation unit 300 is kept active all the time except when the door to the drying room 104 is open. In this example, a 20' container comprises the air circulation unit 300 in the form of two 500W fans.

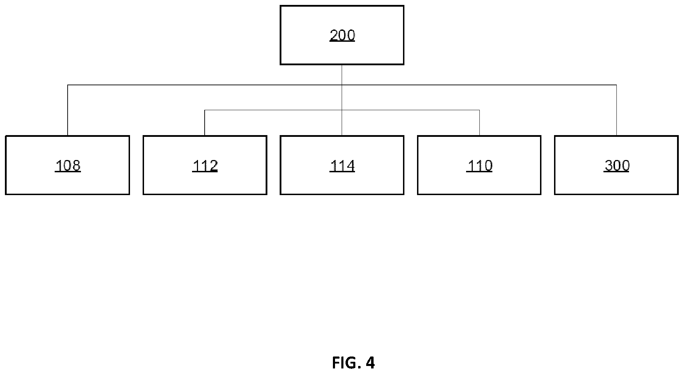

Figure 4 illustrates a control unit 200 according to an embodiment of the invention. The embodiment corresponds to the embodiment shown in figure 2, for which reason only the differences are discussed here. In this embodiment, the control unit 200 is further configured to be able control the air circulation unit 300.

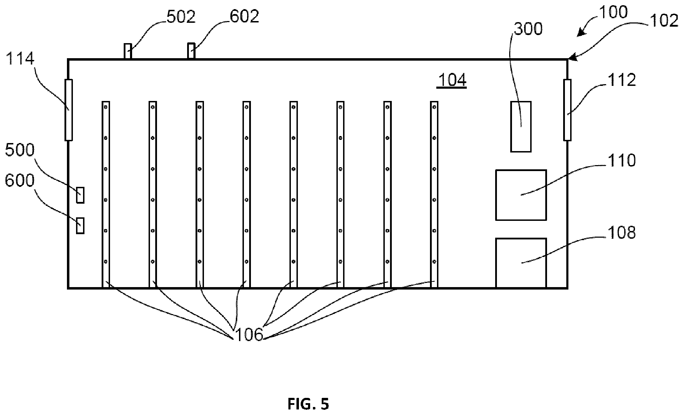

Figure 5 shows a third embodiment of the modular system 100, corresponding to the embodiment shown in figure 3, for which reason only the differences between the two embodiments are discussed here. In this embodiment, the container 102 is provided with an inside temperature sensor 500 and an outside temperature sensor 502. In other embodiments, the container 102 is only provided with the inside temperature sensor 500, i.e. without the outside temperature sensor 502. Having the inside temperature sensor 500 enables an improved control over the parameters for the drying process in the drying room 104. Also illustrated here are an inside humidity sensor 600 and an outside humidity sensor 602. In other embodiments, the container 102 is only provided with the inside humidity sensor 600, i.e. without the outside humidity sensor 602, or vice versa.

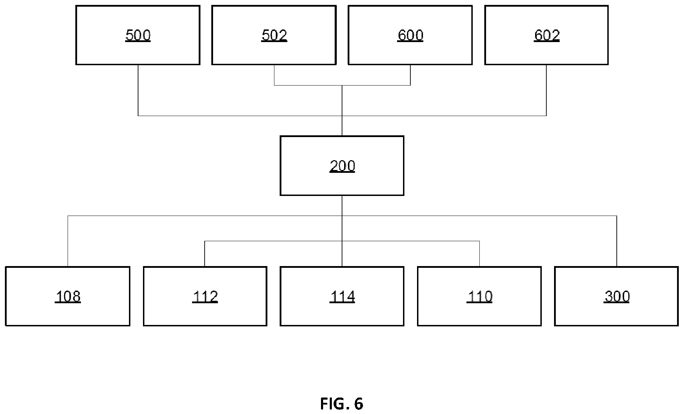

Figure 6 shows an embodiment of the control unit 200 corresponding to the embodiment shown in figure 4, for which reason only the differences between the embodiments are discussed here. In this embodiment, the control unit 200 is further configured to receive temperature data from the inside temperature sensor 500 and optionally, the outside temperature sensor 502. Furthermore, in embodiments of the control unit 200, the unit 200 is further configured to receive humidity data from an inside humidity sensor 600 and/or an outside humidity sensor 602. In this case, the control unit 200 enables an even greater control over the drying process, since control over the air heater 108, the freezing unit 110, the ambient air intake 112, and the exhaust unit 114 may be performed based on the received data from the sensors.

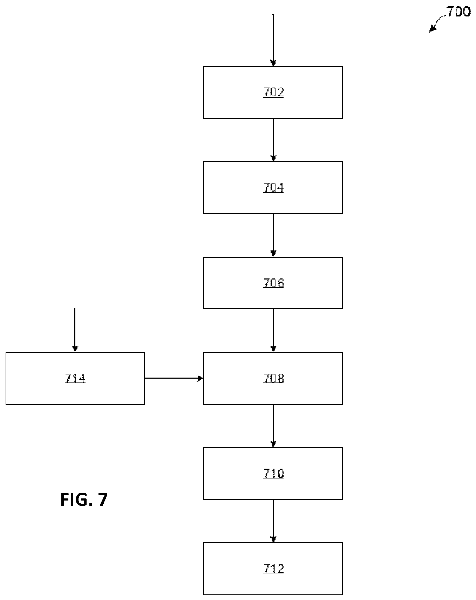

Figure 7 shows an embodiment of the method 700 of producing a dried seafood product according to the invention, here illustrated as a dried fish product. Using the method, a fresh fish to be dried is firstly cleaned 702, before being fillet 704. Then the fillet is cut 706 into thin slices of preferably 2-10mm thickness. The slices are then arranged 708 on a rack (708, 106) in the drying room 104, where the actual drying process takes place. Throughout the drying process, the air temperature is controlled 710 via a freezing unit 110 and an air heater 108 such that the temperature is generally kept in the range of -10 degrees C to 0 degrees C. Finally, the drying process is ended 712 after a predetermined time, or when a preselected moisture content of the dried seafood product has been reached. The method according to the invention is also suitable for other types of seafood, as mentioned above. In that case, the food item may not require to be sliced before drying. For instance, shrimp or prawns may be considered thin enough to be dried directly. In that case, the process starts by de-shelling the shrimp 714, and then arranging the meat pieces on the rack (708, 106) as also the case for drying fish. The remaining process is substantially the same in both cases.

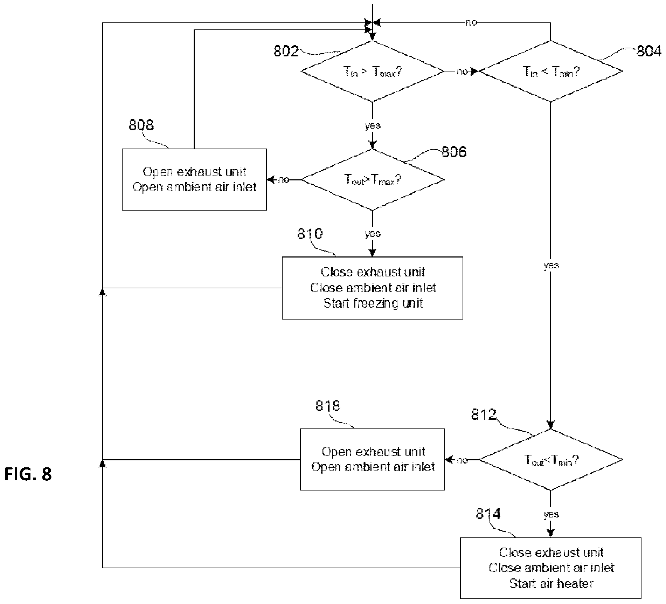

Figure 8 is a flow-chart that illustrates an embodiment 800 of maintaining the temperature within the drying room 104, $T_{in}$, within a preselected temperature range of $T_{Min} < T_{in} < T_{Max}$. Firstly, the inside temperature, $T_{in}$ is compared 802 to the maximum allowed temperature, $T_{Max}$. If the temperature is lower than the maximum, it is tested 804 if the inside temperature is lower than the minimum allowed temperature, $T_{Min}$. If the temperature is found to be within the range, the process loops back to the top 802. However, if the inside temperature is found to be higher than the maximum temperature, it is evaluated if an outside temperature is also higher than the maximum temperature 806, in which case 810 inflow of ambient air from outside the drying room 104 is blocked, e.g. by turning of an exhaust unit and closing an air inlet, and the freezing unit is activated, before the process loops to the top 802. If the outside temperature is lower than the maximum temperature, inflow of ambient air from outside is initiated 808, by opening an ambient air intake and activating an exhaust unit, and the process loops to the top 802.

In case the inside temperature $T_{in}$ is colder than $T_{Min}$ 804, then it is evaluated if the outside temperature, $T_{out}$, is also colder than $T_{Min}$, in which case 814 the exhaust unit is deactivated, the ambient air intake is closed, and the air heater activated; and the process looped to the top 802. If, however, the outside temperature is higher than the minimum temperature, then the ambient air intake is opened, and the exhaust unit activated 818.

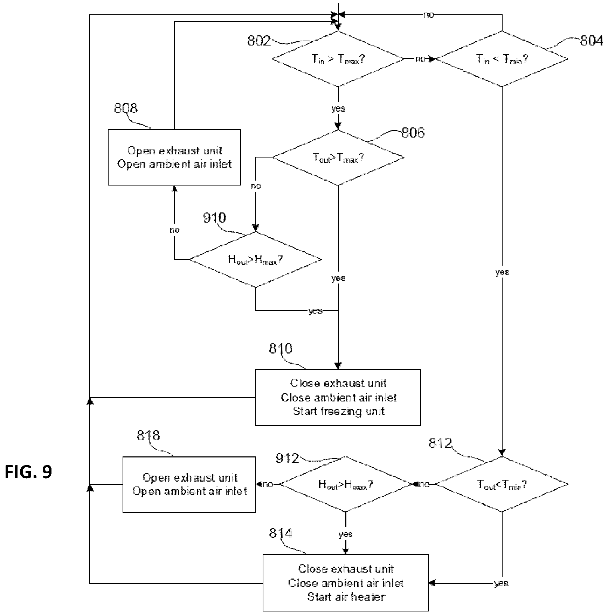

The method of drying the seafood product using this method of controlling the temperature may further benefit from measuring air humidity inside the drying room 104 as well as an outside air humidity. If such humidity data is available, the tests of whether the outside temperature is outside the desired temperature range may for instance be immediately preceded by a test e.g. of whether the outside air humidity higher than the inside humidity, in which case inflow of outside air into the drying room 104 is undesirable, and direct control of the inside temperature via the air heater 108 or freezing unit 110 may be more appropriate. This is illustrated in figure 9, which is similar to figure 8, except that in this embodiment, the detected outside humidity, $H_{out}$, is compared to a predetermined humidity threshold value, $H_{max}$ before opening the ambient air intake and activating the exhaust unit 910, 912. Only if the outside humidity is lower than the threshold value, $H_{out} < H_{max}$, is outside air allowed to enter the drying room 104. In this way, ingress of humid air from the outside into the drying room 104 may be avoided or minimized. In one embodiment, the predetermined humidity threshold value, $H_{max}$, may be selected based on criteria such as knowledge of local climate, experience, etc. In one example, $H_{max}$ is chosen to be in the range of 70-95%, such as 75-90%, or even 80-85%.

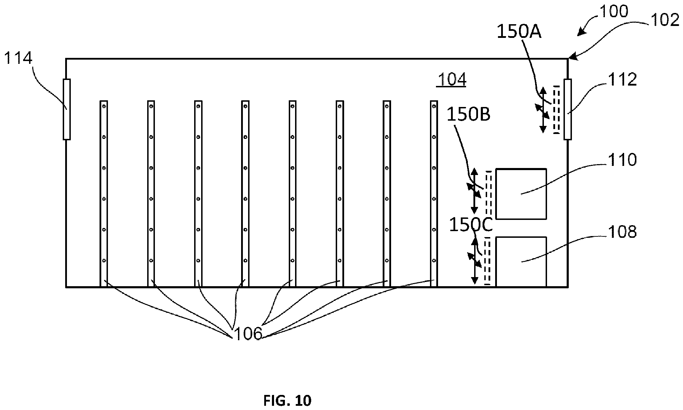

Figure 10 illustrates an embodiment of the modular system 100. The embodiment corresponds to the one shown in the previous figures, for which reason only the differences are discussed here. For improving the air flow around the seafood products that are applied onto the rack 106, a controllable fane (150A, 150B, 150C) is arranged in front of the air heater unit 108, the freezing unit 110, and/or the ambient air intake 112. The fane (150A,150B,150C) is configured to move in a vertical and horizontal direction such that the air blowing away from the units (108, 110, 112) are distributed more equally around and between the seafood products. That results in a more similar drying of the seafood products, and which then results in a more equal quality of the dried seafood products at the end of the drying process. The controllable fane (150A, 150B, 150C) may be combined with the air circulation unit 300 in the container 102, not illustrated in Figure 10, and thereby, a more equal condition around and between the seafood products is obtained.

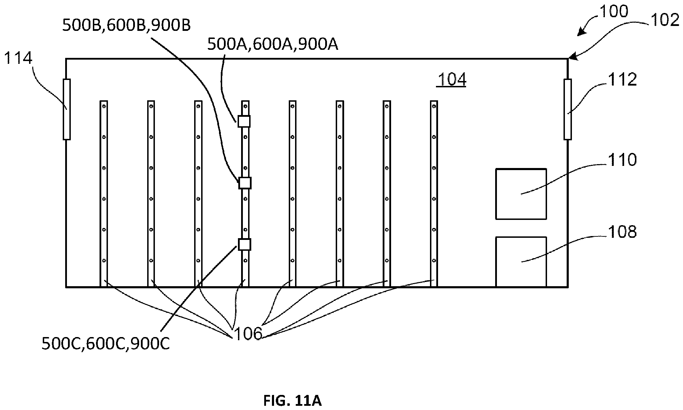

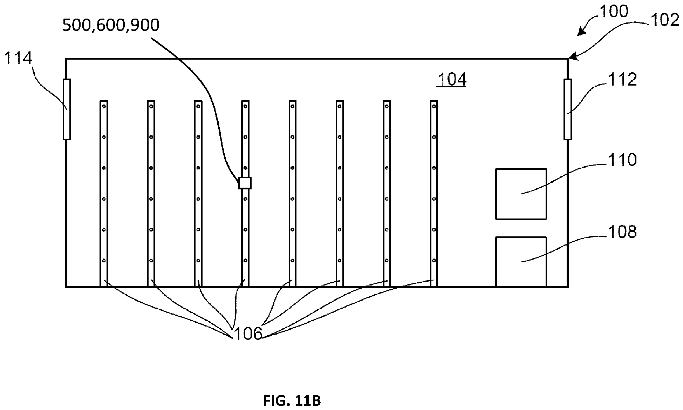

Figures 11A and 11B illustrate an embodiment of the modular system 100. The embodiment corresponds to the one shown in the previous figure, for which reason only the differences are discussed here. In this example, sensors (500, 600, 900) are arranged at different locations on a rack 106. The sensors (500, 600, 900) are either applied onto or integrated into the racks 106. In other examples, the sensors (500, 600, 900) may even be placed on or into the meat of the seafood. Figure 11A illustrate an example where one or more of the sensors (500, 600, 900) are arranged at a top section (500A, 600A, 900A) of the rack 106, a middle section (500B, 600B, 900B) of the rack 106 and/or at a bottom section (500C, 600C, 900C) of the rack 106. Furthermore, at each of these sections, the sensors (500A, 500B, 500C, 600A, 600B, 600C, 900A, 900B, 900C) may be arranged between, onto and/or injected into the seafood material. The bottom section is closest to the floor of the container and the top section is closest to the roof of the container 102.

In figure 11B, the rack 106 includes one or more of the sensors (500, 600, 900) arranged within the middle section of the rack 106. The time for drying the seafood product is longer than for the seafood product arranged within the top and the bottom section of the rack 106.

Thereby, it is possible to monitor more precisely the condition of the seafood material during the drying process. This makes it easier and more convenient to control the drying process remotely. In another example, only a temperature sensor 500, a humidity sensor 600 or a moisture sensor 900 may be arranged in one or more of the top, middle and bottom section of the rack 106.

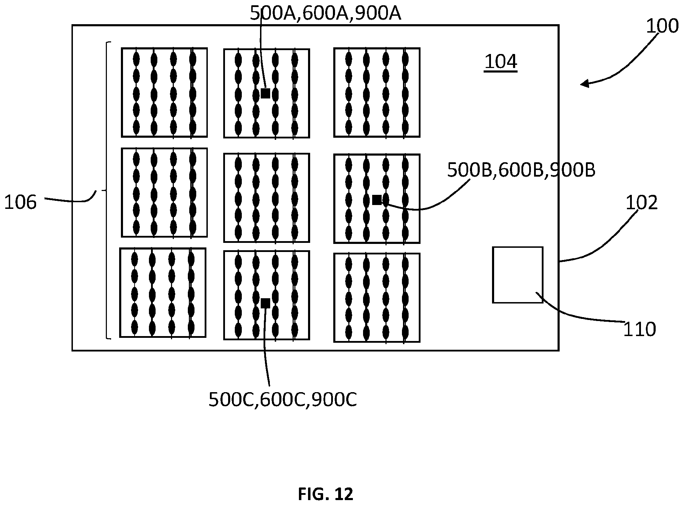

Figure 12 illustrates an embodiment of the modular system 100. The embodiment corresponds to the one shown in the previous figures, for which reason only the differences are discussed here. The drying room 104 includes a plurality of racks 106 with the sensors (500A, 500B, 500C, 600A, 600B, 600C, 900A, 900B, 900C), and they may be arranged within the drying room 104 according to a formation which then makes is possible to approximate the humidity, the temperature and/or the moisture around and in each seafood material within the drying room 104. The approximation is based on inputs from each sensor (500A, 500B, 500C, 600A, 600B, 600C, 900A, 900B, 900C), the known formation of the arrangement of the racks 106 and the distance between the racks 106. In this situation the formation is determined by trigonometry. Thereby, the remote monitoring of the drying process becomes more convenient as the monitoring of the seafood material during the drying process becomes more precise than if arranged at the exhaust unit 114 and/or at the ambient air intake 112.

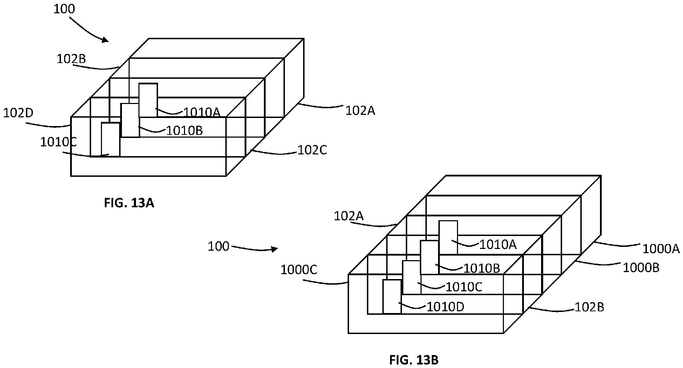

Figure 13A and 13B illustrate examples of the modular system 100 including a combination of multiple containers (102, 1000). In Figure 13A, the container 102 which has been described in the previous figures, is denoted as the main container 102A in the examples illustrated in Figure 13A and 13B. For increasing the capacity of the production of dried seafood products it is an advantage that the main container 102A is configured to be connected to one or more other containers (102B, 102C, 102D, 1000A, 1000B, 1000C). The one or more other containers may be (102B, 102C, 102D, 1000A, 1000B, 1000C):

- similar to the main container 102A, which is for producing dried seafood products, this is illustrated in Figure 13A,
- configured to prepare the seafood products for being dried, this is illustrated in figure 13B,
- configured to store the seafood products under controlled conditions before the drying process, this is illustrated in figure 13B,
- configured to store the dried seafood products under controlled conditions, this is illustrated in figure 13B, and
- configured to facilitate one or more user of the modular system with a toilet, a kitchen, and/or a dressing room, this is illustrated in figure 13B.

The one or more other containers (1000A, 1000B, 1000C) which is not similar to the main container 102A, is configured to either store and/or prepare the seafood either before or after the drying process, and furthermore, to facilitate one or more use of the modular system.

In both figures 13A and 13B, the containers (102A, 102B, 102C, 102D, 1000A, 1000B, 1000C), such as the main container 102A and the one or more other containers (102B, 102C, 102D, 1000A, 1000B, 1000C) of the modular system 100 may include an opening (1010A,1010B,1010C,1010D) in a wall of the container which may be closed by a closing mean, such as a door. Around the opening (1010A,1010B,1010C, 1010D) a sealing mean is arranged, and the sealing mean is configured to be connected to another sealing mean of another opening or directly on to the another opening (1010A,1010B,1010C, 1010D) of another container (102A, 102B, 102C, 102D, 1000A, 1000B, 1000C) of the modular system 100. The sealing mean results in a sealed path that allows the users of the modular system 100 to operate within and between the containers (102A, 102B, 102C, 102D, 1000A, 1000B, 1000C) without the need of going outside the containers (102A, 102B, 102C, 102D, 1000A, 1000B, 1000C).

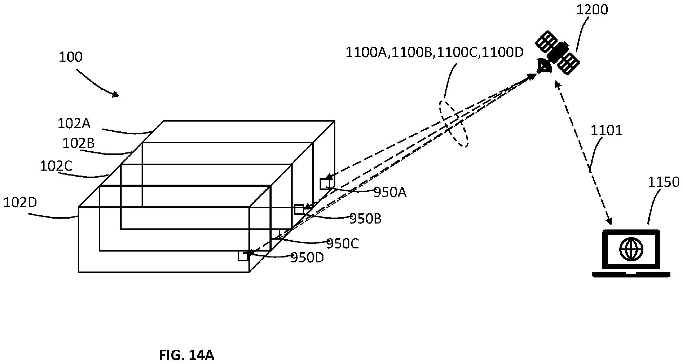

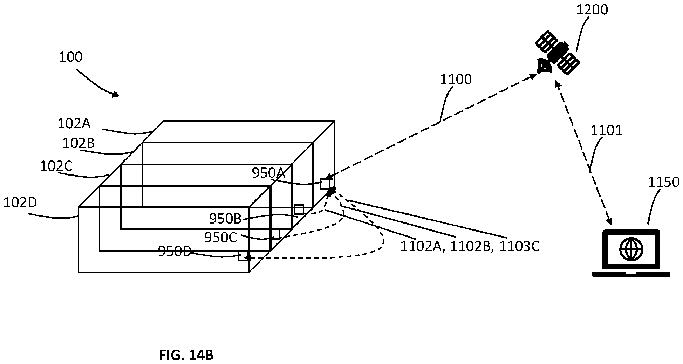

Figures 14A and 14B illustrate an example where the main container 102A and the one or more other containers (102B, 102C, 102D, 1000A, 1000B, 1000C) are sharing one or more features, such as an air heater 108, a freezing unit 110, a communication system (950A, 950B, 950C, 950D) and a control unit 200, it is of an advantage that the one or more other containers (102B, 102C, 102D, 1000A, 1000B, 1000C) and the main container 102A are configured to communicate with each other via a short-range communication link (1102A,1102B, 1102C). The links may be bidirectional. In figure 14B, the communication between the containers is performed via the main container 102A and via the short-range communication link (1102A,1102B, 1102C). In a situation where a feature of a container (102A, 102B, 102C, 102D) of the modular system 100 is defected, the other containers (102A,102B, 102C, 102D) of the modular system 100 may act as a backup for the defected feature, and thereby, the reliability of the modular system 100 improves significantly. In figure 14B, the communication system 950A of the main container 102A is configured to communicate with a communication device 1150 via a satellite 1200. The communication to the satellite 1200 and the communication device 1150 includes a long-range communication link (1100, 1101) including one or more long range communication technologies. The long-range communication link (1100, 1101) may be based on other than satellite communication. Figure 14A illustrates an example where the communication between the containers (102A, 102B, 102C, 102D) is performed via the satellite 1200 and the communication device 1150. In both figured 14A and 14B, a user of the communication device 1150is able to monitor and control each of the containers (102A, 102B, 102C, 102D) in the modular system 100.

In both figures 14A and 14B an example of the modular system 100 is illustrated including a plurality of containers (102A, 102B, 102C, 102D), however, in other situations the modular system 100 may include a single container 102 which is also configured to communicate with the communication device 1150 either via satellite communication (1200, 1100, 1101) or via other long-range communication link. In yet another example the container 102 is configured to communicate with the communication device 1150 via a short-range communication link 1102.

The controlling and the monitoring of the container(s) (102, 102A, 102B, 102C, 102D) may include logging data that relates to the drying process based on inputs of sensors (500, 600, 900). The control unit 200 is configured to control the air heater 108, the freezing unit 110, the ambient air intake 112 and the exhaust unit 114 based on the logged data provided by the sensors (500,600,900). Furthermore, the control unit 200 is configured to forward the logged data to the communication system 950 of the modular system 100. The communication system 950 is configured to communicate via a short-range communication link (1102A,1102B,1102C) and/or a long-range communication link (1100,1101) to a server, a computer, a smartphone, a satellite phone, a tablet or any kind of the communication device 1150. This enable the possibility of monitoring the drying process remotely. Additionally, the control unit 200 is configured to be controlled via the communication system 950. Thereby, it is possible to control the drying process remotely. This may be relevant if a sudden change to the drying process has to appear due to an incident caused by a defect air heater 108, a freezing unit 110, an ambient air intake 112, an exhaust unit 114 or a sudden change in the weather condition around the container 102. Under normal condition, the control unit 200 controls the drying process automatically based on a pre-programmed drying process.

The short-range communication link (1102A, 1102B, 1102C) may include one or more of the following communication technologies; WI-FI, Bluetooth, Bluetooth Low Energy, EnOcean, Wi-Sun, and ZigBee.

The long -range communication link (1100, 1101) may include one or more of the following communication technologies; LoRa technology, satellite telephone communication, HF/SSB, 3G, 4G, 5G communication technology, and Global System for Mobile communication (GSM).

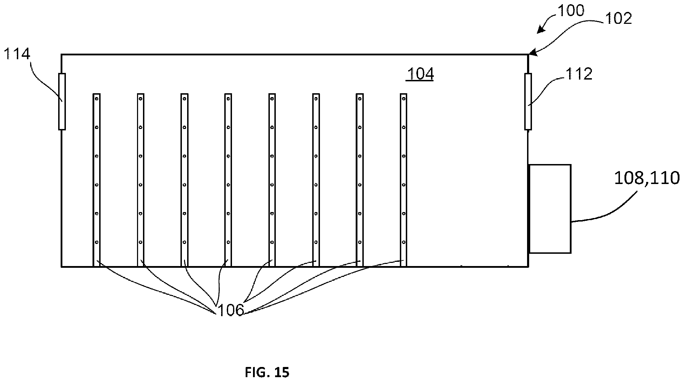

Figure 15 illustrates an embodiment of the modular system 100. The embodiment corresponds to the one shown in the previous figures, for which reason only the differences are discussed here. The air heater 108 and the freezing unit 110 are arranged on the outer surface of the container, and in this specific example, they are combined into a housing. In another example, the air heater and the freezing unit are arranged separately on the outer surface of the container.

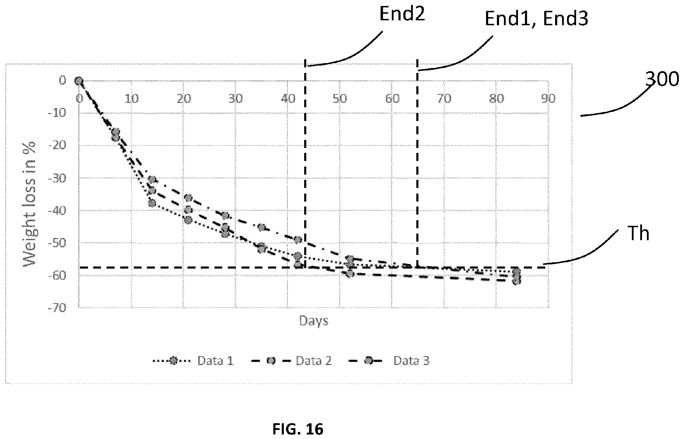

Figure 16 illustrates an example of measured loss in weight in percentage during a drying period of three different racks of products 300. The three racks (data 1, data 2, data 3) include the same type of seafood product but the weight of the three racks is different. Throughout the drying period of the three racks the weight of the racks is measured with the same time interval, and according to the Figure, it is clearly seen that the weight loss appears exponentially. On the Figure a threshold (th) is defined at -58 %, and when the measured weight loss is below the threshold then the quality of the product is acceptable (end1, end2, and3). For data 1 and data 3 the seafood product has achieved an excellent quality after 65 days. For data 2 the seafood product obtains a similar quality at about 43 days. This example illustrates the importance of monitoring the weight loss of the product during the drying period as it is clearly seen that the time of when the product has achieved an acceptable quality is different between the racks. The threshold may vary according to the type of seafood product.

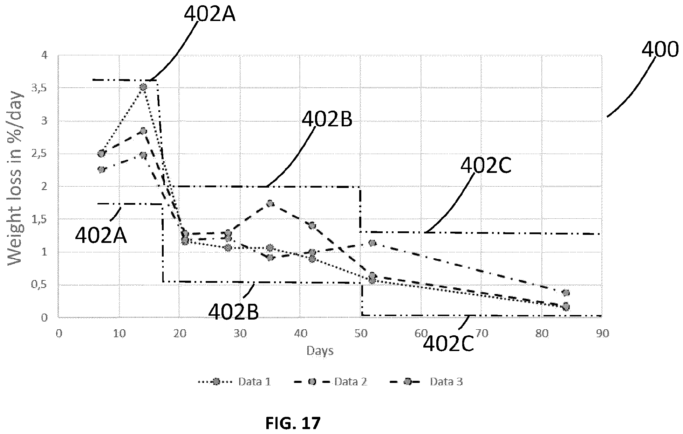

Figure 17 illustrates an example of measured loss in weight in percentage per day during a period of three different racks of products 400. The three racks (data 1, data 2, data 3) include the same type of seafood product but the weight of the three racks is different. Throughout the drying period of the three racks the weight of the racks is measured with the same time interval. Three ranges 402A, 402B, and 402C) of loss in weight in percentage per day are defined for this drying process, and in this example, the measured rates for all three racks (Data 1, Data 2, and Data 3) are kept within the ranges (402A, 402B, and 402C). In this example the processing unit performing the measurement are preprogrammed with the ranges. The ranges may vary according to the type of seafood product.

Although, the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. Modular system (100) for production of dried seafood products, wherein the module comprises a container (102), the container comprising:

   - a drying room (104) for holding racks (106) of seafood materials that are to become the dried seafood products,

      - an air heater (108) configured for heating air in the drying room (104) to exceed a selected minimum temperature,
      - a freezing unit (110) configured for cooling air in the drying room (104) and maintaining an air temperature below a selected maximum tem peratu re,
      - sensors (500, 600, 900) arranged at different locations within the drying room (104), and wherein the sensors (500, 600, 900) provide logged data, and
      - a control unit (200) configured to, based on logged data, control (710) the air temperature in the drying room (104) via the freezing unit (110) and the air heater (108), such that the air temperature is between the selected minimum temperature and the selected maximum temperature for a duration of a drying process of the seafood materials.

2. The system (100) according to claim 1, further comprises;

   - an ambient air intake (112) configured for controllably allowing ingress of ambient air from an outside of the system (100) to the drying room (104), and
   - an exhaust unit (114) configured for controllably allowing discharge of air from the drying room (104).

3. The system (100) according to claim 2, wherein the control unit (200) is configured for controlling one or more of the ambient air intake (112), and/or the exhaust unit (114).

4. The system (100) according to claim 3, comprising a communication system and a communication device, wherein the control unit is configured to communicate unidirectionally and/or bidirectionally with the communication device via the communication system including a short-range communication link and/or a long-range communication link.

5. The system (100) according to any one of the preceding claims, the container (102) further comprising an air circulation unit (300) configured for circulating air within the drying room (104).

6. The system (100) according to claim 5, wherein the air circulation unit (300) is a separate unit.

7. The system (100) according to any one of the preceding claims, wherein the sensors include an inside temperature sensor (500) for measuring an inside temperature, the inside temperature being an air temperature within the drying room, the control unit (200) further being configured for receiving the inside temperature from the inside temperature sensor.

8. The system (100) according to any one of the preceding claims, wherein the sensors include an outside temperature sensor (502) for measuring an outside temperature, the outside temperature being an air temperature of ambient air outside the system (100), the control unit (200) further being configured for receiving the outside temperature from the outside temperature sensor (502).

9. The system (100) according to any one of the preceding claims, wherein the sensors include an inside humidity sensor (600) for measuring an inside humidity, the inside humidity being an air humidity within the drying room (104), the control unit (200) further being configured for receiving the inside humidity from the inside humidity sensor (600).

10. The system (100) according to any of the preceding claims, wherein the sensors include a moisture sensor (900) for measuring a water content of the seafood, the control unit (200) further being configured for receiving the measured water content of the seafood from the moisture sensor (900).

11. The system (100) according to any of the preceding claims, further comprising a weight measurement unit for measuring a weight of the seafood, the control unit (200) further being configured for receiving the measured weight of the seafood from the weight measurement unit.

12. The system (100) according to claim 10, wherein the one or more sensors are arranged within a middle section of the rack, wherein the middle section is between a top section of the rack and a bottom section of the rack, and wherein the top section is arranged closest to a roof of the container (102,102A) when the rack (106) is arranged within the container (102,102A), and wherein the bottom section is arranged closest to a floor of the container (102,102A) when the rack (106) is arranged within the container (102,102A).

13. Method (700) of producing a dried seafood product during a drying process, the method comprising:

   - arranging (708) the pieces of seafood for drying onto a rack in a drying room,
   - providing logged data via sensors arranged within the drying room,
   - controlling (710) an air temperature in the drying room (104) via a freezing unit (110) and an air heater (108), based on the logged data, such that the air temperature is between a selected minimum temperature and a selected maximum temperature for a duration of the drying process, and
   - ending (712) the drying process when a desired product quality has been achieved.

14. The method according to claim 13, wherein providing seafood pieces comprises:

   - cleaning (702) a fresh fish,
   - fillet (704) the fish, and
   - cutting (706) the fish fillet meat into slices.

15. The method according to any one of the claims 13-14 further comprising freezing the seafood for drying, and where the freezing is performed according to a freezing scheme including a temperature change per hour and a minimum temperature.

FIG. 1

**FIG. 2**

**FIG. 3**

**FIG. 4**

**FIG. 5**

| 500 | 502 | 600 | 602 |

| 200 |

| 108 | 112 | 114 | 110 | 300 |

**FIG. 6**

700

702

704

706

714 → 708

710

**FIG. 7**

712

**FIG. 8**

802 — $T_{in} > T_{max}?$ —no→ 804 $T_{in} < T_{min}?$ —no→

yes ↓

808
Open exhaust unit
Open ambient air inlet

←no— 806 $T_{out} > T_{max}?$

yes ↓

810
Close exhaust unit
Close ambient air inlet
Start freezing unit

yes ↓ (804)

818
Open exhaust unit
Open ambient air inlet

←no— 812 $T_{out} < T_{min}?$

yes ↓

814
Close exhaust unit
Close ambient air inlet
Start air heater

**FIG. 9**

**FIG. 10**

FIG. 11A

FIG. 11B

500A,600A,900A

100

104

500B,600B,900B

102

106

110

500C,600C,900C

**FIG. 12**

FIG. 13A

FIG. 13B

**FIG. 14A**

**FIG. 14B**

**FIG. 15**

FIG. 16

FIG. 17

Europäisches Patentamt

European Patent Office

Office européen des brevets

# EUROPEAN SEARCH REPORT

**Application Number**

EP 24 21 9865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 102 106 591 B (JIANGSU QIWU MARINE DEV CO LTD; UNIV JIANGNAN) 18 July 2012 (2012-07-18) * abstract * ----- | 1-15 | INV. A23L17/00 A23B4/03 A23B4/06 A23L17/10 |
| A | JP H06 38675 A (HYOON KK) 15 February 1994 (1994-02-15) * claim 1; examples 1-3 * ----- | 1-15 | A23L17/40 A23L17/50 A23L17/60 |
| A | JP 2009 039000 A (PANASONIC CORP) 26 February 2009 (2009-02-26) * paragraphs [0001] - [0003], [0005] - [0008]; claim 1 * ----- | 1-15 | |
| A | WO 96/36236 A1 (GEARHIES INVESTMENTS LTD [IE]; ADAMS THOMAS MAYNE [IE] ET AL.) 21 November 1996 (1996-11-21) * claims 1-22 * ----- | 1-15 | |

**TECHNICAL FIELDS SEARCHED (IPC)**

A23L
A23B

The present search report has been drawn up for all claims

| Place of search | Date of completion of the search | Examiner |
|---|---|---|
| Munich | 21 March 2025 | Adechy, Miriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9865

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| CN 102106591 | B | 18-07-2012 | NONE | | |
| JP H0638675 | A | 15-02-1994 | JP | 2525309 B2 | 21-08-1996 |
| | | | JP | H0638675 A | 15-02-1994 |
| JP 2009039000 | A | 26-02-2009 | NONE | | |
| WO 9636236 | A1 | 21-11-1996 | AT | E222462 T1 | 15-09-2002 |
| | | | AU | 693364 B2 | 25-06-1998 |
| | | | DE | 69623118 T2 | 28-05-2003 |
| | | | EP | 0830069 A1 | 25-03-1998 |
| | | | IE | 950363 A1 | 27-11-1996 |
| | | | US | 6010397 A | 04-01-2000 |
| | | | WO | 9636236 A1 | 21-11-1996 |

EPO FORM P0459

For more details about this annex : see Official Journal of the European Patent Office, No. 12/82